# EUROPEAN PATENT APPLICATION

(11) **EP 4 699 909 A1**
(43) Date of publication of application: **25.02.2026**
(21) Application number: 25770224.1
(22) Date of filing: 30.04.2025
(51) Int. Cl.: B62D 25/20

(54) **REINFORCING BEAM STRUCTURE FOR FRONT FLOOR OF NEW ENERGY VEHICLE, AND MOUNTING METHOD**

(30) Priority: 01.07.2024 CN 202410871893
(71) Applicant: Chery Automobile Co., Ltd., Wuhu, Anhui 241006 (CN)
(72) Inventor: YAN, Ting, Wuhu, Anhui 241006 (CN); WU, Huapeng, Wuhu, Anhui 241006 (CN); CHENG, Kai, Wuhu, Anhui 241006 (CN); MENG, Fanliang, Wuhu, Anhui 241006 (CN); LIU, Lili, Wuhu, Anhui 241006 (CN)
(74) Representative: Yang, Shu
(86) International application number: PCT/CN2025/092569
(87) International publication number: WO 2026/007526

(57) **Abstract**

The present disclosure discloses a front floor reinforcement beam structure for a new-energy vehicle and a mounting method therefore, and relates to the field of vehicle technologies. The front floor reinforcement beam structure for the new-energy vehicle includes a front cross member and a rear cross member that are connected by a plurality of longitudinal beams, wherein both ends of the front cross member are respectively provided with a connecting side beam, the front cross member is provided with a plurality of mounting reinforcement brackets, and the front cross member is connected to a door sill of the vehicle via the connecting side beams; both ends of the rear cross member are respectively provided with a front seat rear cross member side beam, and a front seat middle mounting bracket is disposed at a middle position of the rear cross member; and the plurality of longitudinal beams include an L-shaped connecting longitudinal beam and a rectangular reinforcement longitudinal beam, wherein one end of the L-shaped connecting longitudinal beam is overlapped with the front cross member, one end of the rectangular reinforcement longitudinal beam is connected to the rear cross member, and another end of the rectangular reinforcement longitudinal beam is connected to the front cross member. The frame structure formed by the cross members and longitudinal beams meets the platform requirements of the vehicle, and the overlapped structure of the L-shaped connecting longitudinal beam and the front cross member improves the connection strength between the L-shaped connecting longitudinal beam and the front cross member.

## Description

This disclosure claims priority to Chinese patent application No. 202410871893.0, filed on July 1, 2024, and entitled "New energy automobile front floor reinforcing beam structure and mounting method", the disclosure of which is incorporated herein by reference in its entirety.

### TECHNICAL FIELD

The present disclosure relates to the field of vehicle technologies, and in particular, to a front floor reinforcement beam structure for a new-energy vehicle and a mounting method.

### BACKGROUND

With the rapid development of the automotive industry, improving vehicle reliability, safety, and comfort is becoming increasingly important. In response to the national call for energy conservation and emission reduction, coupled with the growing popularity of the new-energy market, electric vehicles are increasingly required to have a higher range. This poses a greater challenge in ensuring that the structure meets various performance requirements and at the same time achieves a lightweight design that minimizes weight and at the same time meets layout, performance, and process requirements.

The vehicle front floor reinforcement beam is part of the front floor assembly in the vehicle body frame. It is a reinforcement structure used mainly to support the front seat. The seat rails, seat frame, auxiliary instrument panel, electrical components, etc., are mainly installed on the vehicle front floor reinforcement beam. The quality of the beam structure directly affects the comfort of the seats, the use of instruments and electrical components, etc. The beam structure design also has a great impact on the side-column impact safety. Therefore, designing a beam that meets performance requirements and balances cost and weight is of great significance.

Existing designs typically feature a flat floor panel with three welded stamped cross members, with small covers disposed on two sides wherein the B-pillars are located. Alternatively, a central tunnel in the middle is coupled with two welded stamped cross members, or two longitudinal beams are coupled with two cross members to reinforce the floor panel structure. Because pure electric vehicles lack an exhaust system, the front floor panel is designed without a central tunnel, which results in a bulge cross-section, thereby increasing the difficulty in designing the stiffness at the center mounting point for the front seat on the cross member. The stiffness at that position directly affects the ride comfort of both the driver's and the front passenger's seats. Furthermore, to accommodate the batteries, there is insufficient space under the floor panel for forming a closed beam via two beams buckled in the direction of up and down, which further increases the difficulty in improving the performance on the basis of meeting the side-column impact safety requirements.

### SUMMARY

In response to the problems existing in the prior art, the present disclosure provides a front floor reinforcement beam structure for a new-energy vehicle and a mounting method, which, on the basis of meeting the conditions of layout, process and various performance requirements, maximize weight reduction, reduce the number of members and member overlap, and not increase material thickness, which is beneficial to reducing the weight of the entire vehicle and reducing assembly hours, thereby reducing costs, reducing customer power consumption, and increasing cruising range, thereby improving market competitiveness.

The technical solutions of the present disclosure are as follows.

According to a first aspect of the present disclosure, provided is a front floor reinforcement beam structure for a new-energy vehicle, including a front cross member and a rear cross member that are connected by a plurality of longitudinal beams, wherein both ends of the front cross member are respectively provided with a connecting side beam, the front cross member is provided with a plurality of mounting reinforcement brackets, and the front cross member is connected to a door sill of the vehicle via the connecting side beams; and both ends of the rear cross member are respectively provided with a front seat rear cross member side beam, and a front seat middle mounting bracket is disposed at a middle position of the rear cross member; wherein the plurality of longitudinal beams include an L-shaped connecting longitudinal beam and a rectangular reinforcement longitudinal beam, wherein one end of the L-shaped connecting longitudinal beam is overlapped with the front cross member, one end of the rectangular reinforcement longitudinal beam is connected to the rear cross member, and another end of the rectangular reinforcement longitudinal beam is connected to the front cross member.

In some embodiments of the present disclosure, the front seat rear cross member side beam includes a first side beam and a second side beam that are connected to each other, wherein the first side beam covers a side, away from a front floor panel of the vehicle, of the rear cross member and a side, away from the front cross member, of the rear cross member, the second side beam covers the side, away from the front floor panel of the vehicle, of the rear cross member and a side, close to the front cross member, of the rear cross member, and each of the first side beam and the second side beam is provided with a sill beam welding edge, a floor panel welding edge, and a side beam connection welding edge.

In some embodiments of the present disclosure, characteristic triangular ribs are provided at connection positions between the sill beam welding edge and the first side beam and between the sill beam welding edge and the second side beam, and the sill beam welding edge is connected to a sill beam on the front floor panel by welding.

In some embodiments of the present disclosure, the L-shaped connecting longitudinal beam includes a connecting portion and a reinforcing portion; wherein an extension direction of the reinforcing portion is parallel to the front cross member, an extension direction of the connecting portion is perpendicular to the front cross member, one end of the connecting portion is connected to the rear cross member, another end of the connecting portion is connected to one end of the reinforcing portion, and the reinforcing portion is connected to a side, close to a front floor panel of the vehicle, of the front cross member.

In some embodiments of the present disclosure, the rear cross member is formed by rolling, a cross-section of the rear cross member has a square-shaped structure, and a front seat rear cross member mounting hole and a seat mounting and positioning hole are defined on the rear cross member.

In some embodiments of the present disclosure, the front cross member is formed by stamping, and a front seat mounting hole is defined on a boss mounting surface of each mounting reinforcement bracket of the front cross member.

In some embodiments of the present disclosure, the plurality of longitudinal beams includes two L-shaped connecting longitudinal beams symmetrically arranged with respect to a plane perpendicular to a length direction of the rear cross member.

In some embodiments of the present disclosure, the front seat middle mounting bracket is a weldment, an edge of the front seat middle mounting bracket is provided with a flange structure, a plurality of second plug welding holes are defined on the front seat middle mounting bracket, and the front seat middle mounting bracket is welded to the rear cross member via the plurality of second plug welding holes.

In some embodiments of the present disclosure, a side, close to the front cross member, of the front seat middle mounting bracket is bent toward a front floor panel of the vehicle, and a cross-section, perpendicular to a length direction of the rear cross member, of the front seat middle mounting bracket is Z-shaped, and at least a portion of the front seat middle mounting bracket is welded to at least one of the plurality of longitudinal beams.

In some embodiments of the present disclosure, an orthographic projection of the front seat middle mounting bracket on the front floor panel of the vehicle has a U-shaped structure, wherein a recessed portion of the U-shaped structure is located on a side close to the front cross member.

In some embodiments of the present disclosure, a plug welding hole is defined on the front seat middle mounting bracket, the front seat middle mounting bracket is welded to the connecting portion via the plug welding hole, and an edge, close to the front cross member, of the front seat middle mounting bracket is a welding boundary connected to the L-shaped connecting longitudinal beam.

In some embodiments of the present disclosure, a local recessed surface is defined at a middle position of the connecting portion, wherein the local recessed surface is configured to fit with a surface of the front floor panel of the vehicle, a battery mounting hole is defined on the local recessed surface, and the connecting portion is fixedly connected to a battery via the battery mounting hole.

In some embodiments of the present disclosure, the plurality of longitudinal beams includes two rectangular reinforcement longitudinal beams symmetrically arranged with respect to a plane perpendicular to a length direction of the rear cross member, and two L-shaped connecting longitudinal beams are disposed between the two rectangular reinforcement longitudinal beams.

In some embodiments of the present disclosure, reinforcing portions of the two L-shaped connecting longitudinal beams respectively extend in opposite directions, the rectangular reinforcement longitudinal beam is between the reinforcing portion and the rear cross member, and another end of the rectangular reinforcement longitudinal beam is separately connected to the reinforcing portion and the front cross member.

According to a second aspect of the embodiments of the present disclosure, a method for mounting a front floor reinforcement beam structure for a new-energy vehicle is provided, the method including:
fixing and mounting the rear cross member on a front floor panel of the vehicle, and connecting both ends of the rear cross member respectively to left and right door sills of the front floor panel via front seat rear cross member side beams;
connecting one end of the L-shaped connecting longitudinal beam and one end of the rectangular reinforcement longitudinal beam to the rear cross member, and fixedly connecting one end of the L-shaped connecting longitudinal beam and one end of the rectangular reinforcement longitudinal beam to the front floor panel;
connecting another end of the L-shaped connecting longitudinal beam and another end of the rectangular reinforcement longitudinal beam to the front cross member, and fixedly connecting the front cross member to a floor panel;
connecting both ends of the front cross member respectively to door sills of the vehicle via connecting side beams; and
mounting the front seat middle mounting bracket at the middle position of the rear cross member, and mounting the plurality of mounting reinforcement brackets on the front cross member.

The one or more technical solutions of the present disclosure achieve the following beneficial effects.

In the front floor reinforcement beam structure for the new-energy vehicle provided by the embodiments of the present disclosure, a plurality of longitudinal beams are connected and provided between the front and rear cross members to form a frame structure with two cross members and multiple longitudinal beams. This rectangular frame structure formed by the overlapping of the cross member and the longitudinal beam meets the platform requirements of the vehicle, and this structure not only meets the requirements of NVH performance, strength fatigue, safety, layout, process, etc., but also maximizes weight reduction, reduces the number of molds, and saves costs more effectively. The overlapped structure of the L-shaped connecting longitudinal beam and the front cross member increases the connection area between the L-shaped connecting longitudinal beam and the front cross member and improves the connection strength between the L-shaped connecting longitudinal beam and the front cross member.

In the front floor reinforcement beam structure for the new-energy vehicle provided by the embodiments of the present disclosure, by disposing the mounting reinforcement bracket on the front cross member and disposing the front seat middle mounting bracket on the rear cross member, the connection strength between the seat and the front cross member and between the seat the rear cross member is improved, and the comfort of the seat is improved. At the same time, by designing the structure of the front seat middle mounting bracket and disposing flanges, inclined ribs, plug welding holes, and other structures on the front seat middle mounting bracket, the rigidity of the seat mounting point in the middle of the rear cross member is further increased.

In the front floor reinforcement beam structure for the new-energy vehicle provided by the embodiments of the present disclosure, both ends of the rear cross member are respectively provided with a front seat rear cross member side beam, which ensures the connection stiffness between the rear cross member and the door sill. No notches are required at the corners of the front seat rear cross member side beam, which greatly improves the continuity of force transmission, achieves the cross-sectional force required for safe side collision and pillar collision, and enhances the stiffness and strength at the seat mounting point.

The front floor reinforcement beam structure for the new-energy vehicle provided by the present disclosure innovatively proposes a design scheme in which a rolled member is combined with a cross member and a longitudinal beam. The rear cross member adopts a rolled member, and the front cross member adopts an ordinary stamping member. A variety of combining and connection technologies, such as welding and spot welding, are employed to make the platform-based performance of the front floor assembly better, suitable for various configurations of multiple vehicle models, and make the product more competitive in the market.

The present disclosure has a reasonable design layout, a reasonable process, is convenient to manufacture, suitable for mass production, and reduces manufacturing and production costs to the greatest extent.

### BRIEF DESCRIPTION OF DRAWINGS

FIG. 1 is a schematic diagram of a front floor reinforcement beam structure for a new-energy vehicle according to some embodiments of the present disclosure;
FIG. 2 is a schematic structural diagram of the front floor reinforcement beam structure for the new-energy vehicle mounted on the front floor panel of the vehicle according to some embodiments of the present disclosure;
FIG. 3 is a schematic structural diagram of a rear cross member and a longitudinal beam according to some embodiments of the present disclosure;
FIG. 4 is a schematic structural diagram of a front cross member and a longitudinal beam according to some embodiments of the present disclosure;
FIG. 5 is a schematic structural diagram of a rear cross member according to some embodiments of the present disclosure;
FIG. 6 is a top view of a rear cross member according to some embodiments of the present disclosure;
FIG. 7 is a partial schematic structural diagram of a rear cross member according to some embodiments of the present disclosure;
FIG. 8 is a cross-sectional view of a rear cross member according to some embodiments of the present disclosure;
FIG. 9 is a schematic diagram of a front seat middle mounting bracket according to some embodiments of the present disclosure;
FIG. 10 is a schematic diagram of a front seat rear cross member side beam according to some embodiments of the present disclosure; and
FIG. 11 is a schematic structural diagram of an L-shaped connecting longitudinal beam according to some embodiments of the present disclosure.

In the figures: 1. First side beam; 2. Second side beam; 1-1. Characteristic triangular rib; 1-2. Sill beam welding edge; 1-3. Side beam connection welding edge; 1-4. First plug welding hole; 1-5. Floor panel welding edge; 2-1. Mating hole; 3. Rear cross member; 3-1. Cross-section of the rear cross member; 3-2. Front seat rear cross member mounting hole; 3-3. Seat mounting and positioning hole; 4. Front seat middle mounting bracket; 4-1. Flange structure; 4-2. Inclined rib; 4-3. Second plug welding hole; 4-4. Positioning hole required for stamping process; 4-5. Welding boundary; 4-6. Recessed portion; 5. L-shaped connecting longitudinal beam; 5-1. Battery mounting hole; 5-2. Boss surface; 5-3. Connecting portion; 5-4. reinforcing portion; 6. Rectangular reinforcement longitudinal beam; 7. Front cross member; 7-1. Concave platform; 8. Connecting side beam; 9. Mounting reinforcement bracket; 9-1. Front seat mounting hole.

### DETAILED DESCRIPTION

The present disclosure is described hereinafter in detail with reference to the accompanying drawings and embodiments.

In order to make the objectives, technical solutions, and advantages of the present disclosure clearer, the embodiments of the present disclosure are further described in detail hereafter with reference to the accompanying drawings.

Unless otherwise defined, the technical or scientific terms used herein shall have the ordinary meaning understood by a person of ordinary skill in the art to which the present disclosure pertains. The terms "first," "second," "third," and similar words used in the patent specification and claims of the present disclosure do not indicate any order, quantity, or importance, but are merely used to distinguish between different components. Similarly, terms such as "a" or "an" do not indicate a quantitative limitation, but rather indicate the presence of at least one. Terms such as "include" or "comprise" mean that the element or object preceding "include" or "comprises" encompasses the elements or objects listed after "include" or "comprises," and their equivalents, and do not exclude other elements or objects. Terms such as "connected" or "connecting" are not limited to physical or mechanical connections, but include electrical connections in some embodiments, whether direct or indirect. Terms such as "upper," "lower," "left," "right," "top," and "bottom" are used only to indicate relative positional relationships. In the case that the absolute position of the described object changes, the relative positional relationship possibly changes accordingly.

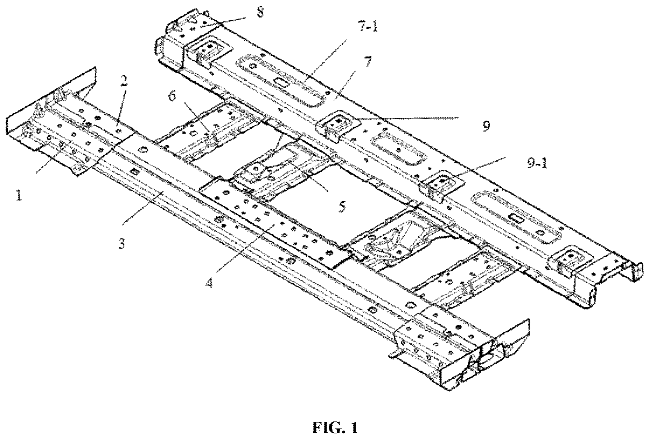

FIG. 1 is a schematic diagram of a front floor reinforcement beam structure for a new-energy vehicle according to some embodiments of the present disclosure. In some embodiments of the present disclosure, as shown in FIG. 1, the front floor reinforcement beam structure for the new-energy vehicle includes a front cross member 7 and a rear cross member 3 that are connected by a plurality of longitudinal beams. Both ends of the front cross member 7 are respectively provided with a connecting side beam 8. The front cross member 7 is provided with a plurality of mounting reinforcement brackets 9. The front cross member 7 is connected to a door sill of the vehicle via the connecting side beam 8. Both ends of the rear cross member 3 are respectively provided with a front seat rear cross member side beam, and a front seat middle mounting bracket 4 is disposed at a middle position of the rear cross member 3. The plurality of longitudinal beams includes an L-shaped connecting longitudinal beam 5 and a rectangular reinforcement longitudinal beam 6. One end of the L-shaped connecting longitudinal beam 5 is overlapped with the front cross member 7, one end of the rectangular reinforcement longitudinal beam 6 is connected to the rear cross member 3, and another end of the rectangular reinforcement longitudinal beam 6 is connected to the front cross member 7.

In the front floor reinforcement beam structure for the new-energy vehicle according to some embodiments of the present disclosure, a plurality of longitudinal beams are connected and provided between the front cross member 7 and the rear cross member 3 to form a frame structure with two cross members and multiple longitudinal beams. This rectangular frame structure formed by the overlapping of the cross member and the longitudinal beam meets the platform requirements of the vehicle, and this structure not only meets the requirements of NVH performance, strength fatigue, safety, layout, process, etc., but also maximizes weight reduction, reduces the number of molds, and saves costs more effectively. By disposing the mounting reinforcement bracket 9 on the front cross member 7 and disposing the front seat middle mounting bracket 4 on the rear cross member 3, the connection strength between the seat and the front cross member 7 and between the seat and the rear cross member 3 is improved, and the comfort of the seat is improved. The overlapped structure of the L-shaped connecting longitudinal beam 5 and the front cross member 7 increases the connection area between the L-shaped connecting longitudinal beam 5 and the front cross member 7 and improves the connection strength between the L-shaped connecting longitudinal beam 5 and the front cross member 7.

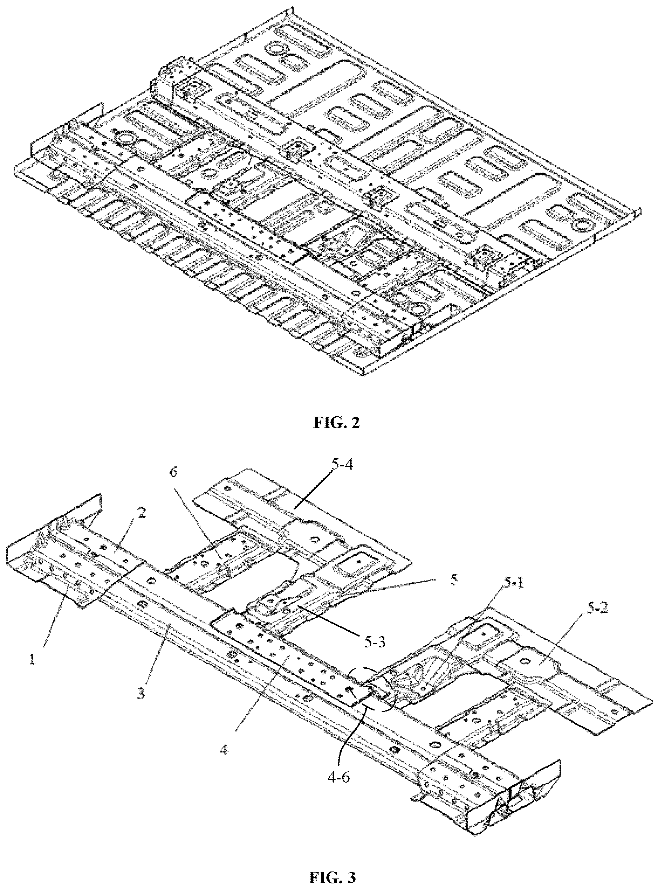

FIG. 2 is a schematic structural diagram of a front floor reinforcement beam structure for a new-energy vehicle mounted on the front floor panel of the vehicle according to some embodiments of the present disclosure. In some embodiments, as shown in FIG. 2, the number of cross members is in the range of 2-4, and the number of longitudinal beams is in the range of 2-6. In some embodiments, the front floor reinforcement beam structure for the new-energy vehicle according to some embodiments of the present disclosure has four longitudinal beams. The connected cross members and longitudinal beams form a frame structure including two cross members and four longitudinal beams on the front floor panel. The number of cross members and longitudinal beams is increased or decreased according to the layout and performance requirements in some embodiments, such as, including three cross members and two longitudinal beams, or including two cross members and five longitudinal beams.

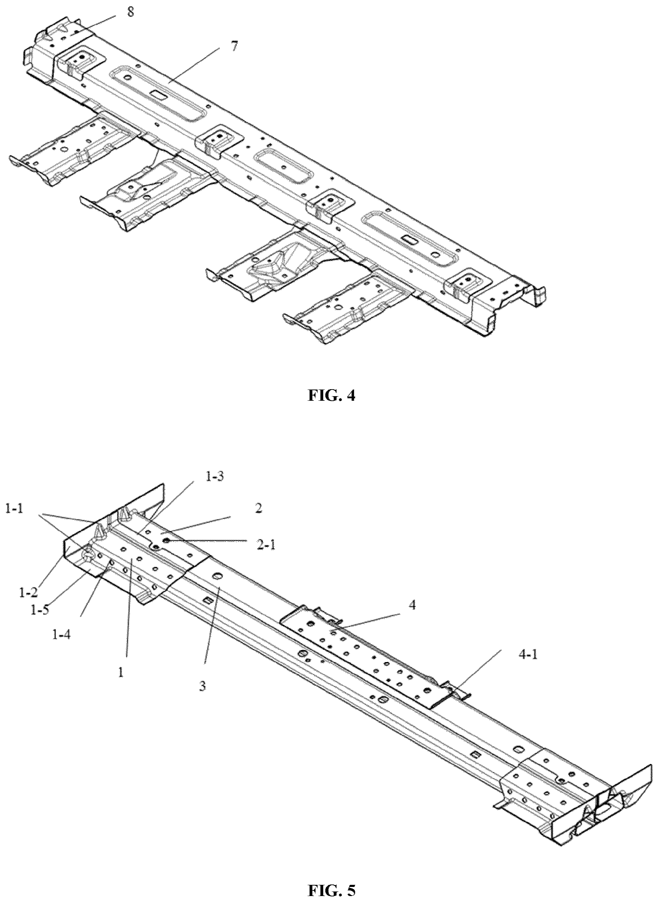

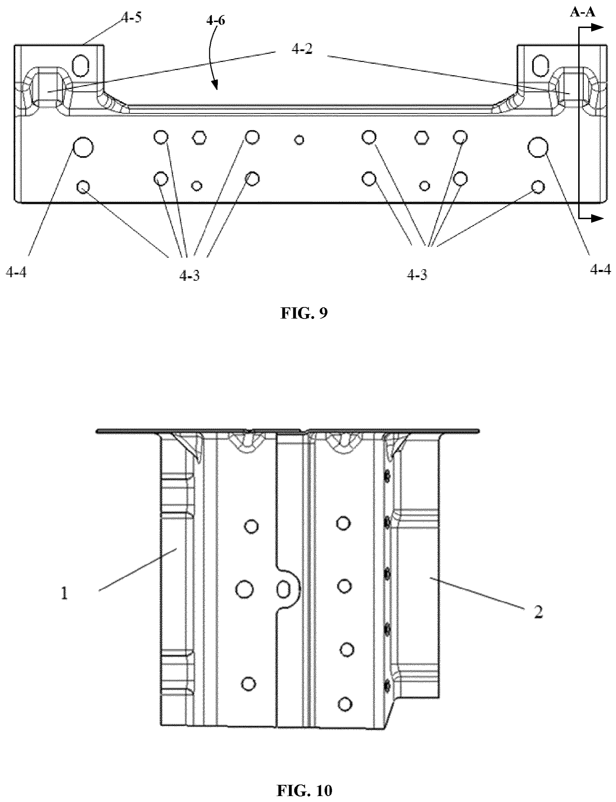

FIG. 5 is a schematic structural diagram of a rear cross member according to some embodiments of the present disclosure. FIG. 10 is a schematic diagram of a front seat rear cross member side beam according to some embodiments of the present disclosure. As shown in FIGS. 5 and 10, the front seat rear cross member side beam includes a first side beam 1 and a second side beam 2 that are connected to each other. The first side beam 1 covers a side, away from the front floor panel of the vehicle, of the rear cross member 3 and a side, away from the front cross member 7, of the rear cross member 3. The second side beam 2 covers the side, away from the front floor panel of the vehicle, of the rear cross member 3 and a side, close to the front cross member 7, of the rear cross member 3. Each of the first side beam 1 and the second side beam 2 is provided with a sill beam welding edge 1-2, a floor panel welding edge 1-5, and a side beam connection welding edge 1-3. Characteristic triangular ribs 1-1 are disposed at connection positions between the sill beam welding edge 1-2 and the first side beam 1, and between the sill beam welding edge 1-2 and the second side beam 2. The sill beam welding edge 1-2 is connected to the sill beam on the front floor panel by welding.

By separating the side beam of the front seat rear cross member in parts, the connection rigidity between the side beam and the door sill is ensured. To meet process requirements, the corner, i.e., bending position, needs no notch design, which significantly improves force transmission continuity, achieves the cross-sectional forces required for side impact and pillar impact safety, and enhances the rigidity and strength of the seat mounting points. The characteristic triangular ribs 1-1 on the first side beam 1 and the second side beam 2 should be as close as possible to the upper edges of the first side beam 1 and the second side beam 2 to increase the joint bending stiffness of the member itself.

Furthermore, the connection to the sill beam is achieved via the provided sill beam welding edge 1-2, and the connection to the front floor panel is achieved via the provided floor panel welding edge 1-5. A boss at the junction of the floor panel welding edge 1-5 and the vehicle front floor panel better matches the connection strength at the floor panel. In some embodiments, both sill beam welding edge 1-2 and floor panel welding edge 1-5 are provided with as many connection welding points as possible. The side beam connection welding edge 1-3 is the welding edge of the first side beam 1 and the second side beam 2, and utilizes three layers of welds at the junction with the door sill, thereby further increasing the connection rigidity and ensuring the connection strength.

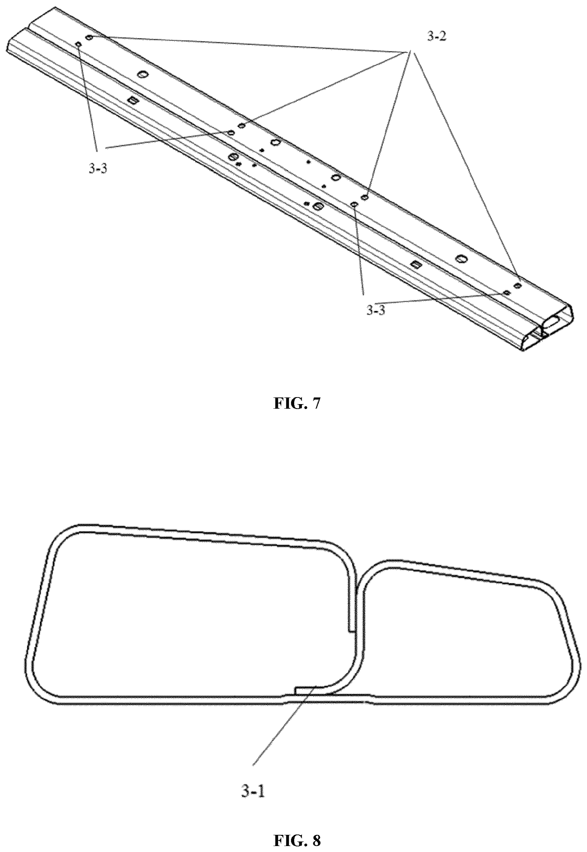

FIG. 7 is a partial schematic structural diagram of the rear cross member according to some embodiments of the present disclosure. In some embodiments of the present disclosure, as shown in FIGS. 5 and 7, first plug welding holes 1-4 are defined on the first side beam 1 and the second side beam 2. The specific number of the first plug welding holes 1-4 is not limited in the embodiments of the present disclosure, but needs to meet the flatness design required for assembly at the same time, and is in the range of 4-15 in some embodiments. In some embodiments, a total of eleven first plug welding holes 1-4 are defined on the first side beam 1 and the second side beam 2. The first plug welding holes 1-4 are mainly used to respectively connect the first side beam 1 and the second side beam 2 to the rear cross member 3. A mating hole 2-1 is defined on the second side beam 2, and a seat mounting and positioning hole 3-3 is defined on the rear cross member 3. The mating hole 2-1 completely overlaps with the seat mounting and positioning hole 3-3 for mounting the seat, and at the same time prevents the position of the second side beam 2 from affecting the seat installation.

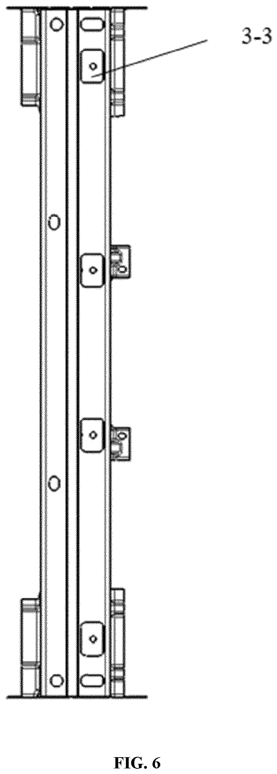

In some embodiments of the present disclosure, the rear cross member 3 is integrally formed by rolling. FIG. 6 is a top view of the rear cross member according to some embodiments of the present disclosure, and FIG. 8 is a cross-sectional view of the rear cross member according to some embodiments of the present disclosure. As shown in FIGS. 6-8, the cross-section of the roll-formed component has a square-shaped structure. Specifically, the cross-sectional shape of the roll-formed component is formed by two or three square shapes. In some embodiments, during the processing process, a plate is partially bent to form a characteristic cross-section of a small square shape; and then the plate is welded by welding, and the remaining plate is rolled again and then welded to the small square-shaped vertical welding plane. The two closed cavities formed greatly increase the vertical flexural rigidity and axial stiffness, improve the axial force of the cross-section, and provide a high strength guarantee to meet the side-column impact safety.

Furthermore, front seat rear cross member mounting holes 3-2 are defined on the rear cross member 3, and the number of the front seat rear cross member mounting holes 3-2 is four. The two in-between mounting holes 3-2 have relatively lower stiffness due to being far from the door sill, and thus, local reinforcement is required. Similarly, four seat mounting and positioning holes 3-3 are formed.

FIG. 4 is a schematic structural diagram of a front cross member and a longitudinal beam according to some embodiments of the present disclosure. As shown in FIGS. 1 and 4, the front cross member 7 is formed by stamping. Due to cost and space constraints, the cross-sectional height of the front cross member 7 is higher than the cross-sectional height of the rear cross member 3 by approximately 14 mm. This effectively compensates for the loss of flexural rigidity and cross-sectional axial force resistance caused by the single cavity. A concave platform 7-1 is provided on the side of the front cross member 7 facing away from the vehicle front floor panel. The concave platform 7-1 is configured to mount the vehicle interior trim parts and, at the same time, increase the local stiffness of the rear cross member 3.

Limited by cost and layout space, a difference between the connecting side beam 8 and the first side beam 1 and the second side beam 2 is that notches of different sizes are formed at the corners of the connecting side beam 8. The connecting side beam 8 has a simple structure and is easy to stamp and form, and also meets the requirements of stiffness, strength, and collision safety.

Further, a front seat mounting hole 9-1 is defined on the boss mounting surface of each mounting reinforcement bracket 9 of the front cross member 7. The mounting reinforcement bracket 9 is connected to the upper surface of the front cross member and the side welding points to form a closed beam structure, which greatly increases the local stiffness of the seat mounting point.

FIG. 3 is a schematic structural diagram of a rear cross member and a longitudinal beam according to some embodiments of the present disclosure. FIG. 9 is a schematic diagram of a front seat middle mounting bracket according to some embodiments of the present disclosure. Referring to FIGS. 3 and 9, the front seat middle mounting bracket 4 is a weldment. The edge of the front seat middle mounting bracket 4 is provided with a flange structure 4-1. The flange structure 4-1 helps increase the flexural rigidity and torsional rigidity of the front seat middle mounting bracket 4. In some embodiments, the bending height of the flange structure 4-1 in the vehicle height direction ranges from 4 mm to 12 mm. A plurality of second plug welding holes 4-3 are defined on the front seat middle mounting bracket 4, and the front seat middle mounting bracket 4 is welded to the rear cross member 3 via the plurality of second plug welding holes 4-3. In some embodiments of the present disclosure, the number of the second plug welding holes 4-3 is in the range of 3 to 15. The specific number of the second plug welding holes 4-3 is not limited, but must meet the flatness design requirements of the process and not generate abnormal noise at the contact surface.

In some embodiments of the present disclosure, as shown in FIGS. 1 and 3, the L-shaped connecting longitudinal beam 5 includes a connecting portion 5-3 and a reinforcing portion 5-4. The extension direction of the reinforcing portion 5-4 is parallel to the length direction of the front cross member 7, and the extension direction of the connecting portion 5-3 is perpendicular to the length direction of the front cross member 7. One end of the connecting portion 5-3 is connected to the rear cross member 3, and another end of the connecting portion 5-3 is connected to one end of the reinforcing portion 5-4. The reinforcing portion 5-4 is connected to the side, close to the front floor panel of the vehicle, of the front cross member 7. The reinforcing portion 5-4 is stacked on the front cross member 7, thereby increasing the area of the connecting surface between the L-shaped connecting longitudinal beam 5 and the front cross member 7 and improving the connection strength between the L-shaped connecting longitudinal beam 5 and the front cross member 7.

In some embodiments of the present disclosure, as shown in FIG. 1 and FIG. 3, the plurality of longitudinal beams includes two L-shaped connecting longitudinal beams 5 symmetrically arranged with respect to a plane perpendicular to the length direction of the rear cross member 3.

In some embodiments of the present disclosure, as shown in FIGS. 3 and 9, the side, close to the front cross member 7, of the front seat middle mounting bracket 4 is bent toward the front floor panel of the vehicle, and the cross-section A-A, perpendicular to the length direction of the rear cross member 3, is Z-shaped. At least a portion of the front seat middle mounting bracket 4 is welded to at least one of the plurality of longitudinal beams. The side, close to the front cross member 7, of the front seat middle mounting bracket 4 is first bent toward the front floor panel of the vehicle and then bent toward the front cross member 7, thereby adapting the front seat middle mounting bracket 4 to the connection structure between the rear cross member 3 and the plurality of the longitudinal beams, increasing the welding area between the front seat middle mounting bracket 4 and the rear cross member 3 and the plurality of the longitudinal beams, and improving the stability of the seat installation.

In some embodiments of the present disclosure, as shown in FIG. 9, an orthographic projection of the front seat middle mounting bracket 4 on the front floor panel of the vehicle has an U-shaped structure, and a recessed portion 4-6 of the U-shaped structure is located on a side close to the front cross member 7, such that the two ends of the front seat middle mounting bracket 4 bend to form Z-shapes, and thus the two ends of the front seat middle mounting bracket 4 are respectively connected to the connecting portions 5-3 of the two L-shaped connecting longitudinal beams 5.

In some embodiments, as shown in FIG. 9, a plug welding hole is defined on the front seat middle mounting bracket 4, and the front seat middle mounting bracket 4 is welded to the connecting portion 5-3 via the plug welding hole to increase the connection rigidity with the longitudinal beam. The edge, close to the front cross member 7, of the front seat middle mounting bracket 4 is a welding boundary 4-5 connecting to the L-shaped connecting longitudinal beam 5. The length of the welding boundary 4-5 should be as long as possible to the maximum allowable value on the basis of ensuring the tool operation space, so as to ensure the rigidity of the connection between the L-shaped connecting longitudinal beam 5 and the rear cross member 3, and increase the transmission path. The rigidity of the front seat middle mounting bracket 4 is a key reinforcement component that increases the rigidity of the middle seat mounting point on the rolled part. Seat comfort is related to the rigidity of the vehicle body connection point and the rigidity of the seat itself. Good rigidity of the vehicle body connection point is one of the important indicators of seat comfort.

Furthermore, an inclined rib 4-2 is provided at the connection position between the U-shaped structure of the front seat middle mounting bracket and other parts on the front seat middle mounting bracket. Two inclined ribs 4-2 are symmetrically arranged on the left and right, which greatly increases the transition stiffness of the two planes with a height difference of the front seat middle mounting bracket 4.

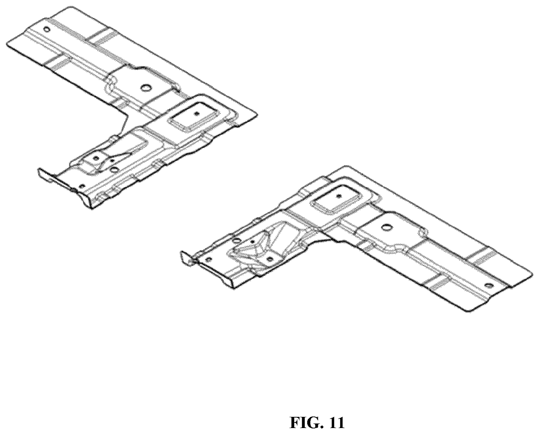

FIG. 11 is a schematic structural diagram of an L-shaped connecting longitudinal beam according to some embodiments of the present disclosure. Referring to FIGS. 3, 4, and 11, the L-shaped connecting longitudinal beam 5 has an L-shaped cross-section with a certain height bulge in the middle. The L-shape connects the two cross members 3 and 7 together, and enhances the flexural rigidity of the rear cross member 7 compared to the rectangular reinforcement longitudinal beam 6. This contributes to safe side impact and pole impact performance, and meets the collision performance requirements of the vehicle under different battery sizes and different weight conditions of two-wheel drive or four-wheel drive vehicles.

Furthermore, a local recessed surface is provided at the connection portion 5-3 of the L-shaped connecting longitudinal beam 5, and the local recessed surface is configured to fit with the floor panel surface of the vehicle. A battery mounting hole 5-1 is defined on the local recessed surface, and the connection portion 5-3 is fixedly connected to the battery via the battery mounting hole 5-1. In some embodiments, the local recess has a downward-inclined cross-section that cooperates with the floor panel to define a battery mounting hole feature, and the connection portion 5-3 is fixedly connected to the battery via bolts. The planar feature of the local recess matches the surface of the floor panel, greatly ensuring the rigidity of the battery connection point, and the rigidity of the battery connection position is relatively strong, which greatly enhances the connection rigidity of the lower structure of the floor panel. The battery under the floor panel and the cross member and longitudinal beam cross-section above the floor panel form a high-rigidity connection structure, which effectively ensures the rigidity at the front seat rear cross member mounting hole 3-2 and the middle seat connection point on the rear cross member 3. In addition, the coordination between the battery and the longitudinal beam also greatly avoids the increase in platform weight and cost.

In some embodiments, as shown in FIGS. 3 and 4, the plurality of the longitudinal beams includes two rectangular reinforcement longitudinal beams 6 symmetrically arranged with respect to a plane perpendicular to the length direction of the rear cross member 3. Two L-shaped connecting longitudinal beams 5 are located between the two rectangular reinforcement longitudinal beams 6. Limited by the assembly space and process weld point connection, it is not necessary to configure all longitudinal beams to be L-shaped structures. The rectangular reinforcement longitudinal beams 6 are welded to the front and rear cross members and the floor panel on all sides, which not only increases the flexural rigidity and torsional rigidity of the cross members 3 and 7, but also separates the floor panel region, significantly increasing the rigidity of the thin floor panel.

In some embodiments of the present disclosure, as shown in FIG. 3, the reinforcing portions 5-4 of the two L-shaped connecting longitudinal beams 5 respectively extend in opposite directions. The rectangular reinforcement longitudinal beam 6 is located between the reinforcing portion 5-4 and the rear cross member 3, and another end of the rectangular reinforcement longitudinal beam 6 is separately connected to the reinforcing portion 5-4 and the front cross member 7. Specifically, another end of the rectangular reinforcement longitudinal beam 6 is partly layered and stacked between the front cross member 7 and the reinforcing portion 5-4, and the another end of the rectangular reinforcement longitudinal beam 6 is separately welded to the front cross member 7 and the reinforcing portion 5-4. This provides a more secure connection between the rectangular reinforcement longitudinal beam 6 and the front cross member 7 and the L-shaped connecting longitudinal beam 5, thereby increasing the overall strength of the frame structure formed by the cross member and longitudinal beam.

In some embodiments, as shown in FIG. 3, the reinforcing portion 5-4 of the L-shape connecting longitudinal beam 5 is provided with a boss surface 5-2. The boss surface 5-2 protrudes toward the front cross member 7. The boss surface 5-2 is configured to increase the stiffness of the reinforcing portion 5-4 itself, thereby improving the connection strength of the front cross member 7.

The mounting process of the front floor reinforcement beam structure for the new-energy vehicle provided by the embodiments includes:
fixing and mounting the rear cross member 3 on a front floor panel of the vehicle, and connecting both ends of the rear cross member 3 respectively to left and right door sills of the front floor panel via front seat rear cross member side beams;
connecting one end of the L-shaped connecting longitudinal beam 5 and one end of the rectangular reinforcement longitudinal beam 6 to the rear cross member 3, and fixedly connecting one end of the L-shaped connecting longitudinal beam 5 and one end of the rectangular reinforcement longitudinal beam 6 to the front floor panel;
connecting another end of the L-shaped connecting longitudinal beam 5 and another end of the rectangular reinforcement longitudinal beam 6 to the front cross member 7, and fixedly connecting the front cross member 7 to a floor panel;
connecting both ends of the front cross member 7 respectively to door sills of the vehicle via connecting side beams 8; and
mounting the front seat middle mounting bracket 4 at the middle position of the rear cross member 3, and mounting the plurality of mounting reinforcement brackets 9 on the front cross member 7.

In the front floor reinforcement beam structure for the new-energy vehicle according to the embodiments of the present disclosure, a design scheme in which a rolled member is combined with a cross member and a longitudinal beam is provided, and a variety of combining and connection technologies such as welding and spot welding are adopted to make the platform-based performance of the front floor panel assembly better. By disposing the mounting reinforcement bracket 9 on the front cross member and the front seat middle mounting bracket 4 on the rear cross member, the strength of the connection point between the seat and the vehicle body is improved, and the comfort of the seat is improved.

In some embodiments of the present disclosure, a method for mounting a front floor reinforcement beam structure for a new-energy vehicle is further provided. The method is configured to mount the front floor reinforcement beam structure for the new-energy vehicle described in any of the above embodiments, and the method includes:
fixing and mounting the rear cross member 3 on a front floor panel, and connecting both ends of the rear cross member 3 respectively to left and right door sills of the front floor panel via front seat rear cross member side beams;
connecting one end of the L-shaped connecting longitudinal beam 5 and one end of the rectangular reinforcement longitudinal beam 6 to the rear cross member 3, and fixedly connecting one end of the L-shaped connecting longitudinal beam 5 and one end of the rectangular reinforcement longitudinal beam 6 to the front floor panel;
connecting another end of the L-shaped connecting longitudinal beam 5 and another end of the rectangular reinforcement longitudinal beam 6 to the front cross member 7, and fixedly connecting the front cross member 7 to a floor panel;
connecting both ends of the front cross member 7 respectively to door sills of the vehicle via side beams 8; and
mounting the front seat middle mounting bracket 4 at the middle position of the rear cross member 3, and mounting the plurality of mounting reinforcement brackets 9 on the front cross member 7.

Various additional exemplary embodiments of the present disclosure are described by way of the following embodiments.

Embodiment 1. A front floor reinforcement beam structure for a new-energy vehicle includes a front cross member 7 and a rear cross member 3 that are connected by a plurality of longitudinal beams; wherein both ends of the front cross member 7 are respectively provided with a connecting side beams 8 connected to a door sill, and the front cross member 7 is provided with a plurality of mounting reinforcement brackets 9; and both ends of the rear cross member 3 are respectively provided with a front seat rear cross member side beam, and a front seat middle mounting bracket 4 is disposed at a middle position of the rear cross member 3; wherein the plurality of longitudinal beams include an L-shaped connecting longitudinal beam 5 and a rectangular reinforcement longitudinal beam 6, and the rectangular reinforcement longitudinal beam 6 is disposed inside the L-shaped connecting longitudinal beam 5.

Embodiment 2. The front floor reinforcement beam structure for the new-energy vehicle according to Embodiment 1, wherein the front seat rear cross member side beam includes a first side beam 1 and a second side beam 2 connected front and rear, wherein each of the first side beam 1 and the second side beam 2 is provided with a sill beam welding edge 1-2, a floor panel welding edge 1-5, and a side beam connection welding edge 1-3.

Embodiment 3. The front floor reinforcement beam structure for the new-energy vehicle according to Embodiment 2, wherein a characteristic triangular rib 1-1 is disposed at the connection position between the sill beam welding edge 1-2 and the side beam, and the sill beam welding edge 1-2 connects the side beam to the sill beam on the front floor panel by welding.

Embodiment 4. The front floor reinforcement beam structure for the new-energy vehicle according to Embodiment 1, wherein the rear cross member 3 is a rolled part, a cross-section of the rolled part has a square-shaped structure, and a front seat rear cross member mounting hole 3-2 and a seat mounting and positioning hole 3-3 are defined on the rear cross member 3.

Embodiment 5. The front floor reinforcement beam structure for the new-energy vehicle according to Embodiment 1, wherein the front cross member 7 is a stamped part, and a front seat mounting hole 9-1 is defined on a boss mounting surface of each mounting reinforcement bracket 9 of the front cross member 7.

Embodiment 6. The front floor reinforcement beam structure for the new-energy vehicle according to Embodiment 1, wherein the front seat middle mounting bracket 4 is a weldment, a flange structure 4-1 is formed around the front seat middle mounting bracket 4, a plurality of second plug welding holes 4-3 are defined on the front seat middle mounting bracket 4, and the front seat middle mounting bracket 4 is welded to the rear cross member 3 via the plurality of second plug welding holes 4-3.

Embodiment 7. The front floor reinforcement beam structure for the new-energy vehicle according to Embodiment 6, wherein a cross-section of the front seat middle mounting bracket 4 is Z-shaped, one end of the front seat middle mounting bracket 4 has a U-shaped structure, a plug welding hole is defined on the U-shaped structure, the front seat middle mounting bracket 4 is connected to the longitudinal beam via the plug welding hole, and the front edge of the U-shaped structure serves as the welding boundary 4-5 connected to the longitudinal beam.

Embodiment 8. The front floor reinforcement beam structure for the new-energy vehicle according to Embodiment 1, two L-shaped connecting longitudinal beams 5 are disposed, and the two L-shaped connecting longitudinal beams 5 are symmetrically arranged on the left and right, a local recessed surface is defined at a middle position of the L-shaped connecting longitudinal beam 5 between the front cross member 7 and the rear cross member 3 that the L-shaped connecting longitudinal beam 5 is connected to, the local recessed surface fits with the front floor panel surface; a battery mounting hole 5-1 is defined on the local recessed surface, and the local recessed surface is connected to the battery via the battery mounting hole 5-1.

Embodiment 9. The front floor reinforcement beam structure for the new-energy vehicle according to Embodiment 1, two rectangular reinforcement longitudinal beams 6 are disposed, the two rectangular reinforcement longitudinal beams 6 are symmetrically arranged on the left and right, and the four sides of the rectangular reinforcement longitudinal beams 6 are closing welded to the front cross member 7, the rear cross member 3 and the front floor panel.

Embodiment 10. A method for mounting the front floor reinforcement beam structure for the new-energy vehicle according to Embodiment 1, including:
fixing and mounting the rear cross member 3 on a front floor panel, and connecting both ends of the rear cross member 3 respectively to left and right door sills of the front floor panel via front seat rear cross member side beams;
connecting the L-shaped connecting longitudinal beam 5 and the rectangular reinforcement longitudinal beam 6 to the rear cross member 3, and fixing the L-shaped connecting longitudinal beam 5 and the rectangular reinforcement longitudinal beam 6 with the front floor panel;
connecting the L-shaped connecting longitudinal beam 5 and the rectangular reinforcement longitudinal beam 6 to the front cross member 7, and fixing the front cross member 7 with a floor panel;
connecting both ends of the front cross member 7 respectively to left and right door sills of the front floor panel via side beams 8; and
mounting the front seat middle mounting bracket 4 at the middle position of the rear cross member 3, and mounting the plurality of mounting reinforcement brackets 9 on the front cross member 7.

In the mounting method for the front floor reinforcement beam structure for the new-energy vehicle according to the embodiments of the present disclosure, the rear cross member, the longitudinal beam, and the front cross member are mounted in sequence, and then the front seat middle mounting bracket and a plurality of mounting reinforcement brackets are mounted. Various structures are mounted in sequence according to an overlapping order, thereby improving the mounting efficiency and mounting effect of the reinforcement beam structure.

The above does not limit the present disclosure in any form. Although the present disclosure has been disclosed as above through the embodiments, it is not intended to limit the present disclosure. Any person skilled in the art can make slight changes or modifications without departing from the scope of solutions of the present disclosure to acquire equivalent embodiments with equivalent changes. Any simple modifications, equivalent changes, and alternations made to the above embodiments based on the technical essence of the present disclosure without departing from the content of the technical solution of the present disclosure are still within the scope of the technical solution of the present disclosure.

## Claims

1. A front floor reinforcement beam structure for a new-energy vehicle, comprising a front cross member (7) and a rear cross member (3) that are connected by a plurality of longitudinal beams, wherein both ends of the front cross member (7) are respectively provided with a connecting side beam (8), the front cross member (7) is provided with a plurality of mounting reinforcement brackets (9), and the front cross member (7) is connected to a door sill of the vehicle via the connecting side beam (8); both ends of the rear cross member (3) are respectively provided with a front seat rear cross member side beam, and a front seat middle mounting bracket (4) is disposed at a middle position of the rear cross member (3); and the plurality of longitudinal beams 9 comprise an L-shaped connecting longitudinal beam (5) and a rectangular reinforcement longitudinal beam (6), wherein one end of the L-shaped connecting longitudinal beam (5) is overlapped with the front cross member (7), one end of the rectangular reinforcement longitudinal beam (6) is connected to the rear cross member (3), and another end of the rectangular reinforcement longitudinal beam (6) is connected to the front cross member (7).

2. The front floor reinforcement beam structure for the new-energy vehicle according to claim 1, wherein the front seat rear cross member side beam comprises a first side beam (1) and a second side beam (2) that are connected to each other, wherein the first side beam (1) covers a side, away from a front floor panel of the vehicle, of the rear cross member (3) and a side, away from the front cross member (7), of the rear cross member (3), the second side beam (2) covers the side, away from the front floor panel of the vehicle, of the rear cross member (3) and a side, close to the front cross member (7), of the rear cross member (3), and each of the first side beam (1) and the second side beam (2) is provided with a sill beam welding edge (1-2), a floor panel welding edge (1-5), and a side beam connection welding edge (1-3).

3. The front floor reinforcement beam structure for the new-energy vehicle according to claim 2, wherein characteristic triangular ribs (1-1) are provided at connection positions between the sill beam welding edge (1-2) and the first side beam (1) and between the sill beam welding edge (1-2) and the second side beam (2), and the sill beam welding edge (1-2) is connected to a sill beam on the front floor panel by welding.

4. The front floor reinforcement beam structure for the new-energy vehicle according to any one of claims 1 to 3, wherein the L-shaped connecting longitudinal beam (5) comprises a connecting portion (5-3) and a reinforcing portion (5-4); wherein an extension direction of the reinforcing portion (5-4) is parallel to the front cross member (7), an extension direction of the connecting portion (5-3) is perpendicular to the front cross member (7), one end of the connecting portion (5-3) is connected to the rear cross member (3), another end of the connecting portion (5-3) is connected to one end of the reinforcing portion (5-4), and the reinforcing portion (5-4) is connected to a side, close to a front floor panel of the vehicle, of the front cross member (7).

5. The front floor reinforcement beam structure for the new-energy vehicle according to claim 1, wherein the rear cross member (3) is formed by rolling, a cross-section of the rear cross member (3) has a square-shaped structure, and a front seat rear cross member mounting hole (3-2) and a seat mounting and positioning hole (3-3) are defined on the rear cross member (3).

6. The front floor reinforcement beam structure for the new-energy vehicle according to claim 1, wherein the front cross member (7) is formed by stamping, and a front seat mounting hole (9-1) is defined on a boss mounting surface of each mounting reinforcement bracket (9) of the front cross member (7).

7. The front floor reinforcement beam structure for the new-energy vehicle according to claim 4, wherein the plurality of longitudinal beams comprises two L-shaped connecting longitudinal beams (5) symmetrically arranged with respect to a plane perpendicular to a length direction of the rear cross member (3).

8. The front floor reinforcement beam structure for the new-energy vehicle according to claim 7, wherein the front seat middle mounting bracket (4) is a weldment, an edge of the front seat middle mounting bracket (4) is provided with a flange structure (4-1), a plurality of second plug welding holes (4-3) are defined on the front seat middle mounting bracket (4), and the front seat middle mounting bracket (4) is welded to the rear cross member (3) via the plurality of second plug welding holes (4-3).

9. The front floor reinforcement beam structure for the new-energy vehicle according to claim 8, wherein a side, close to the front cross member (7), of the front seat middle mounting bracket (4) is bent toward a front floor panel of the vehicle, and a cross-section, perpendicular to a length direction of the rear cross member (3), of the front seat middle mounting bracket (4) is Z-shaped, and at least a portion of the front seat middle mounting bracket (4) is welded to at least one of the plurality of longitudinal beams.

10. The front floor reinforcement beam structure for the new-energy vehicle according to claim 9, wherein an orthographic projection of the front seat middle mounting bracket (4) on the front floor panel of the vehicle has a U-shaped structure, wherein a recessed portion (4-6) of the U-shaped structure is located on a side close to the front cross member (7).

11. The front floor reinforcement beam structure for the new-energy vehicle according to claim 10, wherein a plug welding hole is defined on the front seat middle mounting bracket (4), the front seat middle mounting bracket (4) is welded to the connecting portion (5-3) via the plug welding hole, and an edge, close to the front cross member (7), of the front seat middle mounting bracket (4) is a welding boundary (4-5) connected to the L-shaped connecting longitudinal beam (5).

12. The front floor reinforcement beam structure for the new-energy vehicle according to claim 4, wherein a local recessed surface is defined at a middle position of the connecting portion (5-3), wherein the local recessed surface is configured to fit with a surface of the front floor panel of the vehicle, a battery mounting hole (5-1) is defined on the local recessed surface, and the connecting portion (5-3) is fixedly connected to a battery via the battery mounting hole (5-1).

13. The front floor reinforcement beam structure for the new-energy vehicle according to claim 12, wherein the plurality of longitudinal beams comprises two rectangular reinforcement longitudinal beams (6) symmetrically arranged with respect to a plane perpendicular to a length direction of the rear cross member (3), and two L-shaped connecting longitudinal beams (5) are disposed between the two rectangular reinforcement longitudinal beams (6).

14. The front floor reinforcement beam structure for the new-energy vehicle according to claim 13, wherein reinforcing portions (5-4) of the two L-shaped connecting longitudinal beams (5) respectively extend in opposite directions, the rectangular reinforcement longitudinal beam (6) is between the reinforcing portion (5-4) and the rear cross member (3), and another end of the rectangular reinforcement longitudinal beam (6) is separately connected to the reinforcing portion (5-4) and the front cross member (7).

15. A method for mounting the front floor reinforcement beam structure for the new-energy vehicle as defined in any one of claims 1 to 14, comprising:
fixing and mounting the rear cross member (3) on a front floor panel of the vehicle, and connecting both ends of the rear cross member (3) respectively to left and right door sills of the front floor panel via front seat rear cross member side beams;
connecting one end of the L-shaped connecting longitudinal beam (5) and one end of the rectangular reinforcement longitudinal beam (6) to the rear cross member (3), and fixedly connecting one end of the L-shaped connecting longitudinal beam (5) and one end of the rectangular reinforcement longitudinal beam (6) to the front floor panel;
connecting another end of the L-shaped connecting longitudinal beam (5) and another end of the rectangular reinforcement longitudinal beam (6) to the front cross member (7), and fixedly connecting the front cross member (7) to a floor panel;
connecting both ends of the front cross member (7) respectively to door sills of the vehicle via connecting side beams (8); and
mounting the front seat middle mounting bracket (4) at the middle position of the rear cross member (3), and mounting the plurality of mounting reinforcement brackets (9) on the front cross member (7).
